# EUROPÄISCHE PATENTSCHRIFT

(11) **EP 0 299 276 B1**
(45) Veröffentlichungstag und Bekanntmachung des Hinweises auf die Patenterteilung: **08.06.1994**
(21) Anmeldenummer: 88110323.8
(22) Anmeldetag: 29.06.1988
(51) Int. Cl.: C08G 75/02

(54) **Verfahren zur Isolierung von Polyarylensulfiden**
Method for the isolation of polyarylene sulphides
Procédé d'isolation de poly(sulfures d'arylène)

(30) Priorität: 11.07.1987 DE 3723071
(43) Veröffentlichungstag der Anmeldung: 18.01.1989
(73) Patentinhaber: BAYER AG, 51368 Leverkusen (DE)
(72) Erfinder: Alfes, Franz Dr., D 4150 Krefeld 1 (DE); Alewelt, Wolfgang Dr., D 4150 Krefeld 12 (DE); Eisermann, Wolgang Dr., D 4000 Düsseldorf 31 (DE); Tresper, Erhard Dr., D 4150 Krefeld 1 (DE)

(56) Entgegenhaltungen:
- EP-A- 0 220 490
- DE-A- 3 339 537
- US-A- 4 507 468

## Beschreibung

Die Erfindung betrifft ein Verfahren zur Reinigung und Isolierung von Polyarylensulfiden. Dabei werden Polyarylensulfide mit besonders niedrigem Elektrolytgehalt gewonnen.

Polyarylensulfide (PPS), ihre Herstellung und Isolierung sind bekannt (z.B. US-PS 2 513 188). Im allgemeinen wird zur Isolierung von Polyarylensulfiden die heterogene, Salze enthaltende Produktlösung nach der Polymerisationsreaktion in Wasser oder niedrigen Alkoholen, wie Methanol, Ethanol oder Isopropanol eingetragen und das Polyarylensulfid gefällt. Die Fällform kann durch Verdüsen, Aufgabe auf im Fällmedium rotierende Zahnscheiben, Eintragung in eine Naßmühle oder ein Supraton, die im Fällmedium rotieren, in vielfacher Weise beeinflußt werden. Man erhält stets ein PPS, das noch anorganische Salze und/oder ihre Lösungen enthält. Auch im gewaschenen und getrockneten Polyarylensulfid sind noch Restgehalte von >1.000 ppm anorgischer Ionen, z.B. Chlorid, nachzuweisen.

Es wurde nun gefunden, daß man den Gehalt an anorganischen Ionen, z.B. den Chloridgehalt, im Polyarylensulfid auf <5 ppm erniedrigen kann, wenn man die Reaktionslösung ohne Rührwirkung mit einem definierten Temperaturgradienten abkühlen läßt, den erhaltenen, kristallinen Rückstand fein zerkleinert und das zerkleinerte Produkt mit Wasser und/oder einem organischen Extraktionsmittel behandelt.

Gegenstand der Erfindung ist daher ein Verfahren zur Reinigung von Polyarylensulfiden, dadurch gekennzeichnet, daß die bei der Polymerisartionsreaktion zur Herstellung der Polyarylensulfide erhaltene Reaktionslösung mit einer Abkühlungsrate von 1 bis 5° C pro Sekunde auf eine Temperatur von 30 bis 70° C abgekühlt wird, das abgekühlte Produkt zerkleinert wird und dann mit Wasser und/oder einem organischen Lösungsmittel bei einer Temperatur von 30 bis 70° C behandelt wird.

Erfindungsgemäß kann das Abkühlen beispielsweise im Reaktionsbehälter selbst oder in kleinen Behältern geschehen, die einen raschen Wärmeaustausch mit der Umgebung ermöglichen. Besonders vorteilhaft ist die Verwendung eines üblichen Masselbandes oder eines Kühlbandes, mit dem sich der Temperaturgradient der Abkühlung einstellen läßt. Erfindungsgemäß ist die Abkühlungsrate 0,1 bis 20° C, vorzugsweise 1 bis 5° C pro Sekunde. Bei der Abkühlung wird ein Produkt erhalten, das aus kristallisiertem PPS, Lösungsmittel und anorganischen Nebenbestandteilen, z.B. NaCl, besteht. Es wird fein gemahlen. Das zermahlene Produkt hat eine hohe Filtriergeschwindigkeit bei geringem Feinstantiel.

Bei der Durchführung der erfindungsgemäßen Reinigung wird bevorzugt ein Teil, z.B. des NaCl, schon aus der noch heißen Reaktionslösung bei Temperaturen von 240° C bis 220° C durch Heißfiltration oder mittels eines Dekanters (z.B. gemäß EP 871 000 87) abgetrennt. Dann wird die Lösung auf etwa 30 bis 70° C, bevorzugt 40 bis 60° C, abgekült. Die nun erstarrte Reaktionslösung, die das Kühlband verläßt, wird grob zerkleinert und mit Wasser und/oder organischen Extraktionsmitteln versetzt, so daß ein rührbarer Brei (Maische) entsteht. Zum Zerkleinern können z.B. handelsübliche Portioniervorrichtungen, Naßmühlen u.s.w. verwendet werden. Durch Filtration mit üblichen Filtrationsgeräten wie Nutschen, Rührwerkdrucknutschen oder Filterbändern, die auch mit Über-, Unter- oder Normaldruck arbeiten können, wird dann das PPS abgetrennt. Das isolierte PPS kann vorteilhafterweise dann nochmals mit Wasser und/oder einem organischen Extraktionsmittel gewaschen werden.

Das nach dem erfindungsgemäßen Verfahren gereinigte PPS ist feinpulvrig, hat eine hohes Schüttgewicht (bis 0,5 g/cm³) und zeichnet sich nach dem Waschen durch einen niedrigen Elektrolytgehalt (z.B. anorganisches Chlorid) aus und hat besonders gute elektrische Eigenschaften. Wegen des niedrigen Elektrolytgehalts werden z.B. bei einer Verarbeitung z.B. durch Spritzgießen nur geringe Korrosionen an den dabei verwendeten Formen beobachtet.

Die erfindungsgemäß behandelten Polyarylensulfide können mit anderen Polymeren, Pigmenten und Füllstoffen, beispielsweise Graphit, Metallpulver, Glaspulver, Quarzmehl oder Glasfasern gemischt oder mit üblichen Additiven wie üblichen Stabilisatoren und Entformungsmitteln, versetzt werden. Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z.B. als Automobilteile, Armaturen, Elektroteile, z.B. Schalter, Platinen, elektronische Tafeln, chemikalienresistente und verwitterungsstabile Teile wie Pumpengehäuse und Pumpenflügelräder, Ätzbadschalen, Dichtungsringe, Teile von Büromaschinen und Fernmeldeeinrichtungen, sowie Haushaltsgeräten, Ventilen und Kugellagerteilen u.s.w.

### Beispiele

### Herstellung eines Polyphenylensulfids

In einem mit Rührer und Kolonne ausgerüsteten 600 l fassenden Rührkessel werden 77 400 g Natriumsulfidtrihydrat (600 Mol Na₂S), 12 246 g Natriumacetattrihydrat (15 Mol-%, bezogen auf Na₂S) und 240 l N-Methylcaprolactam vorgelegt und auf 200° C erhitzt. Dabei destilliert eine Flüssigkeit ab, die im wesentlichen aus Wasser besteht. Anschließend werden 88 200 g 1,4-Dichlorbenzol, gelöst in 30 l N-Methylcaprolactam, zugegeben und das Reaktionsgemisch auf 240° C aufgeheizt und 5 Stunden bei dieser Temperatur belassen.

### Beispiel 1

Eine z.B. nach der obigen Vorschrift hergestellte Polyphenylensulfid-Lösung wird auf ein Kühlband aus Edelstahl von 5,0 m wirksamer Länge und 0,6 m wirksamer Breite, das von unten mit Kühlwasser von 17° C gekühlt wird (Kühlwassermenge 3,2 m³/h) mit einer Geschwindigkeit von 10 m/min läuft, mit einer Menge von 600 kg/h, einer Produkttemperatur von 200° C und einer Schichtdicke von 3 bis 4 mm über die gesamte Bandbreite gleichmäßig aufgegeben. Das am Ende des Kühlbandes auf einer Temperatur von ca. 50° C abgekühlte erstarrte Produkt wird in Stücke gebrochen und in einer Mischung aus 20 Vol.-Teilen Wasser und 80 Vol.-Teilen Isopropanol im Verhältnis 1:5 (Polyarylenlösung:wäßrigem Isopropanol) mit einer Naßmühle auf ein Kornspektrum von 500 bis 100 »m zerkleinert. Der Brei wird auf eine Saugnutsche gegeben, abgesaugt und mit destilliertem Wasser gewaschen, bis das ablaufende Wasser eine Leitfähigkeit von ≦5 »S aufweist. Nach 12stündiger Trocknung bei 130° C und 20 mbar wird im Polyarylensulfid ein Gehalt an anorganischem Chlorid kleiner als (<) 5 ppm bestimmt.

## Patentansprüche

1. Verfahren zur Reinigung von Polyarylensulfiden, dadurch gekennzeichnet, daß die bei Polymerisationsreaktion zur Herstellung der Polyarylensulfide erhaltene Reaktionslösung ohne Rührwirkung mit einer Abkühlungsrate von 1 bis 5° C pro Sekunde auf eine Temperatur von 30 bis 70° C abgekühlt wird, das abgekühlte Produkt zerkleinert wird und dann mit Wasser und/oder einem organischen Extraktions-mittel behandelt wird.

## Claims

1. A process for the purification of polyarylene sulfides, characterized in that the reaction solution obtained in the polymerization reaction for the production of the polyarylene sulfides is cooled without stirring to a temperature of 30 to 70°C at a cooling rate of 1 to 5°C per second, the cooled product is size-reduced and is then treated with water and/or an organic extractant.

## Revendications

1. Procédé pour purifier des sulfures de polyarylène, caractérisé en ce que la solution de réaction obtenue à la polymérisation servant à la préparation des sulfures de polyarylène est refroidie sans agitation à une vitesse de 1 à 5°C par seconde jusqu'à une température de 30 à 70°C, le produit refroidi est broyé puis traité par de l'eau et/ou un agent d'extraction organique.
